# EUROPÄISCHE PATENTANMELDUNG

(11) **EP 1 118 449 A1**
(43) Veröffentlichungstag der Anmeldung: **25.07.2001**
(21) Anmeldenummer: 00100984.4
(22) Anmeldetag: 19.01.2000
(51) Int. Cl.: B29C 47/50, B29C 47/38

(54) **Vorrichtung zum Fördern von elastomeren Medien und Verwendung der Vorrichtung**

(71) Anmelder: Maag Pump Systems Textron AG, 8023 Zürich (CH)
(72) Erfinder: Giesler, Jörg, 8049-Zürich (CH); Sonder, Hans, 8636 Wald (CH); Holzer, Heinrich, 8172 Niederglatt (CH); Wagner, Hans-Dieter, 79805 Eggingen (DE)
(74) Vertreter: Troesch Scheidegger Werner AG

(57) **Zusammenfassung**

Die Erfindung betrifft eine Vorrichtung zum Fördern von elastomeren Medien, wobei die Vorrichtung aus einer Zahnradpumpe (1) und einer Zuführvorrichtung (10) besteht, die in Förderrichtung (6) des Fördermediums gesehen vor der Zahnradpumpe (1) angeordnet ist. Erfindungsgemäss ist die Zuführvorrichtung bzw. mindestens eines ihrer Hauptbestandteile, vorzugsweise eine Schnecke, gegenüber der Zahnradpumpe (1) verschiebbar angeordnet, womit dem Fördermedium kontrolliert Energie zuführbar ist.

## Beschreibung

Die vorliegende Erfindung betrifft eine Vorrichtung nach dem Oberbegriff des Patentanspruchs 1 und eine Verwendung der Vorrichtung.

Zahnradpumpen werden insbesondere dann eingesetzt, wenn ein Fördermedium mit konstantem, vergleichsweise hohem Druck gefördert werden soll. Insbesondere eignen sich Zahnradpumpen zur Förderung von hochviskosen Medien, mitunter auch von Elastomeren. So wurden in der Kautschukindustrie bereits Zahnradpumpen zum Fördern von Gummimischungen eingesetzt.

Bei Verwendung einer Zahnradpumpe zur Förderung von elastomeren Medien besteht die technologische Anforderung insbesondere darin, die Zahnlücken der Zahnräder vollständig zu füllen, so dass keine Lufteinschlüsse beim Endprodukt entstehen können. Zur Vermeidung solcher Störstellen und damit die Zahnlücken möglichst vollständig gefüllt werden können, wurde bereits vorgeschlagen, eine Zuführvorrichtung in Förderrichtung des Fördermediums gesehen vor der Zahnradpumpe anzuordnen.

So ist zunächst auf die Lehre gemäss CH-A5-621 515 zu verweisen, die ein Aggregat mit beabstandeten Einzugswalzen zur Erzeugung eines Fülldruckes vor der Zahnradpumpe beschreibt. Es hat sich gezeigt, dass diese bekannte, auch etwa als "Torque Feeder" bezeichnete Zuführvorrichtung die Zahnradpumpe bzw. die Zahnlücken der Zahnräder ungenügend füllen.

Des weiteren ist aus der EP-A2-0 508 080 eine Vorrichtung bekannt, bei der eine auch etwa als Extruder bezeichnete Schnecke vor der Zahnradpumpe angeordnet ist. Mit dieser Füttervorrichtung wird zwar eine gute Füllung der Zahnlücken der Zahnräder erreicht, allerdings wird oft zuviel und auf unkontrollierbare Weise Friktionsenergie in das Fördermedium eingebracht, womit die Gefahr des Anvernetzens - inbesondere bei der Kautschukverarbeitung - heraufbeschworen wird.

Der vorliegenden Erfindung liegt daher die Aufgabe zugrunde, eine Vorrichtung anzugeben, bei der die vorstehend genannten Probleme vermieden werden.

Diese Aufgabe wird durch die im kennzeichnenden Teil des Patentanspruchs 1 angegebenen Massnahmen gelöst. Vorteilhafte Ausgestaltungen der Erfindung sowie eine Verwendung sind in weiteren Ansprüchen angegeben.

Die Erfindung weist die folgenden Vorteile auf: Indem die Zuführvorrichtung bzw. mindestens eines ihrer Hauptbestandteile, vorzugsweise eine Schnecke, gegenüber der Zahnradpumpe verschiebbar ist und dadurch die durch die Zuführvorrichtung ins Fördermedium eingebrachte Energie kontrollierbar ist, kann die Gefahr des Anvernetzens des Fördermediums erfolgreich verhindert, zumindest aber erheblich reduziert werden.

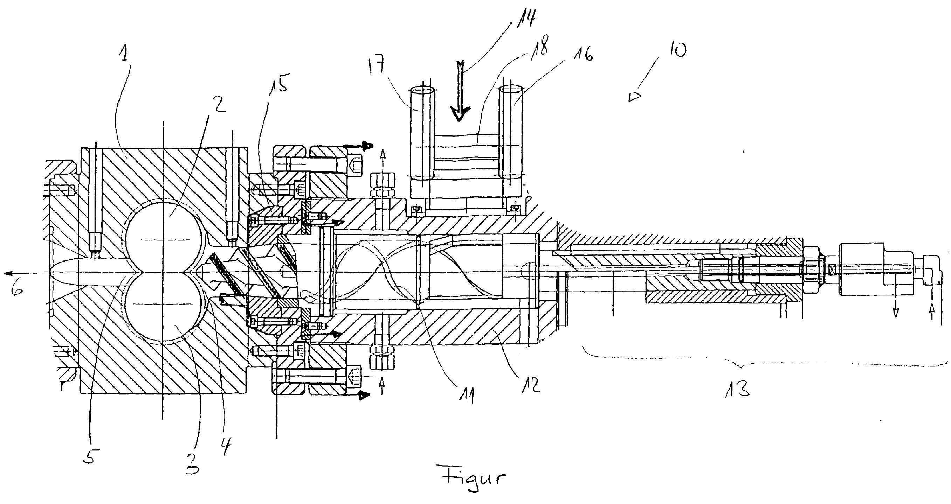

Die Erfindung wird nachfolgend anhand einer Zeichnung beispielsweise näher erläutert. Dabei zeigt die einzige Figur eine erfindungsgemässe Vorrichtung, bestehend aus einer Zahnradpumpe und einer in Serie geschalteten Füttervorrichtung.

In der einzigen Figur ist eine erfindungsgemässe Vorrichtung, bestehend aus einer Zahnradpumpe 1 und einer Zuführvorrichtung 10, wobei die Zahnradpumpe 1 in Förderrichtung 6 eines Fördermediums gesehen nach der Zuführvorrichtung 10 angeordnet ist. Die Zuführvorrichtung 10 besteht aus einer Schnecke 11, die in einer bevorzugten Ausführungsform doppelhelixartig aufgebaut ist, und einem Gehäuse 12, das über verschiedene Verbindungsmittel an das Pumpengehäuse der Zahnradpumpe angeflanscht ist, wobei die Schnecke 11 in das Pumpengehäuse hineinragt.

Erfindungsgemäss weist die Schnecke 11 an deren zahnradpumpenseitigem Ende eine Verjüngung auf. Entsprechend ist in diesem Bereich ein Konus 15 als separater oder als integrierter Bestandteil des Gehäuses 12 vorgesehen. Des weiteren besteht die Zuführvorrichtung 10 aus einer Justiereinheit 13, welche im wesentlichen auf der Achse der Schnecke 11 - jedoch bezüglich der Zahnradpumpe 1 am gegenüberliegenden Schneckenende - angeordnet ist.

Mit Hilfe der Justiereinheit 13 kann die Schnecke 11 relativ zur Zahnradpumpe 1 in Axialrichtung verschoben werden. Durch die Verjüngung der Schnecke 11 und die konische Ausgestaltung des entsprechenden Teils des Gehäuses 12 kann somit die Spaltgrösse zwischen Schneckenrand und Gehäuse 12 im Bereich der Verjüngung bzw. des Konus 15 eingestellt werden. Dies ist von erheblicher Bedeutung, denn wird dadurch ermöglicht, die beim Fördervorgang durch Reibung in das Fördermedium eingebrachte Energie zu kontrollieren bzw. zu steuern. Damit ist die Gefahr des Anvernetzens des Fördermediums vermeidbar, zumindest aber stark reduzierbar.

Das Fördermedium wird über Walzen 16, 17 und 18 in die Zuführvorrichtung 10 eingeführt (Pfeil 14) und von der Schnecke 11 erfasst. Der Transport des Fördermediums erfolgt nun in Axialrichtung der Schnecke 11 zur Zahnradpumpe 1, in der das Fördermedium von der Saugseite 4 auf die Druckseite 5 befördert wird. Die Hauptförderrichtung ist in der Figur mit 6 gekennzeichnet.

In einer bevorzugten Ausführungsform der Erfindung beträgt die Länge der Schnecke 11 weniger als das Fünffache, vorzugsweise weniger als das Dreifache des Durchmessers der Schnecke 11. Diese kurzen Ausführungsformen für die Zuführvorrichtung 10 sind durch die konische Ausbildung bzw. die Verjüngung und die erwähnte axiale Verschiebung der Schnecke 11 möglich. Als Resultat ergibt sich eine weitere Reduktion bzw. eine kontrollierte Abgabe von Reibungsenergie an das Fördermedium. Bei langen Schnecken gemäss dem Stand der Technik - d.h. bei Schnecken, deren Länge mehr als das Zehnfache des Durchmessers beträgt - ist die ins Fördermedium eingebrachte Friktionsenergie gross, wobei die Grösse darüber hinaus nicht kontrollierbar ist.

Trotz der relativ kurzen Bauweise der erfindungsgemässen Zuführvorrichtung wird eine gute Füllung der Zahnlücken der Zahnradpumpen erreicht. Auch dies kann über entsprechende Einstellungen an der Justiereinheit 13 optimiert werden.

Bei einer bevorzugten Ausführungsform der Erfindung ist vorgesehen, dass eine Tangentialebene an die Schnecke im Bereich der Verjüngung einen Winkel von 2 bis 10°, vorzugsweise 8°, mit der Mittelachse der Schnecke einschliesst.

In der Figur ist eine einzelne Verjüngung und ein einzelner Konus dargestellt. Denkbar ist auch, dass mehrere, hintereinander angeordnete Verjüngungen bzw. Konen vorgesehen sind. Hierdurch wird das Prinzip der Erfindung nicht verlassen.

## Patentansprüche

1. Vorrichtung, bestehend aus einer Zahnradpumpe (1) und einer Zuführvorrichtung (10), zum Fördern von elastomeren Medien, wobei die Zuführvorrichtung (10) in Förderrichtung (6) des Fördermediums gesehen vor der Zahnradpumpe (1) angeordnet ist, dadurch gekennzeichnet, dass die Zuführvorrichtung (10) gegenüber der Zahnradpumpe (1) verschiebbar ist und dadurch dem Fördermedium kontrolliert Energie zuführbar ist.

2. Vorrichtung nach Anspruch 1, dadurch gekennzeichnet, dass die Zuführvorrichtung (10) eine Schnecke ist, die mindestens eine Verjüngung aufweist, und dass ein die Schnecke umgebendes Gehäuse zumindest Bereichsweise mindestens einen Konus (15) aufweist.

3. Vorrichtung nach Anspruch 2, dadurch gekennzeichnet, dass sowohl die Verjüngung der Schnecke als auch der Konus (15) am zahnradpumpenseitigen Ende der Zuführvorrichtung (10) vorgesehen ist.

4. Vorrichtung nach Anspruch 2 oder 3, dadurch gekennzeichnet, dass die Verjüngung in Förderrichtung des Mediums gesehen zunimmt.

5. Vorrichtung nach einem der Ansprüche 2 bis 4, dadurch gekennzeichnet, dass die Schnecke doppelhelixartig aufgebaut ist.

6. Vorrichtung nach einem der Ansprüche 2 bis 5, dadurch gekennzeichnet, dass eine Tangentialebene an die Schnecke im Bereich der Verjüngung einen Winkel von 2 bis 10°, vorzugsweise 8°, mit der Mittelachse der Schnecke einschliesst.

7. Vorrichtung nach einem der Ansprüche 2 bis 6, dadurch gekennzeichnet, dass die Länge der Schnecke kleiner als das Fünffache, vorzugsweise das Dreifache, des Durchmessers der Schnecke beträgt.

8. Vorrichtung nach einem der Ansprüche 2 bis 7, dadurch gekennzeichnet, dass die Länge des Konus (15) kleiner ist als der Durchmesser der Schnecke.

9. Verwendung der Vorrichtung nach einem der Ansprüche 1 bis 8 zur Förderung von elastomeren Medien, insbesondere Kautschuk.
